# EUROPEAN PATENT APPLICATION

(11) **EP 2 159 038 A1**
(43) Date of publication of application: **03.03.2010**
(21) Application number: 07765884.7
(22) Date of filing: 28.05.2007
(51) Int. Cl.: B29C 70/34, B29C 33/50, B29C 70/26

(54) **METHOD AND TOOL FOR PRODUCING COMPOSITE-MATERIAL STRUCTURES**

(71) Applicant: Airbus Operations S.L., 28906 Madrid (ES)
(72) Inventor: TABARÉS FERNÁNDEZ, Patricia, E-28911 Leganés, Madrid (ES); LLAMAS SANDÍN, Raúl, E-28300 Aranjuez, Madrid (ES); DEL CAMPO SAYAGO, Sergio, E-28850 Torrejón De Ardóz, Madrid (ES)
(74) Representative: Elzaburu Marquez, Alberto
(86) International application number: PCT/ES2007/070099
(87) International publication number: WO 2008/145771

(57) **Abstract**

The invention relates to a process for manufacturing stiffened structures (1) in composite materials formed by an outer skin (2) and a plurality of stiffeners (3) the cross-section of which has a closed shape delimiting an inner opening (6), comprising the following steps: a) providing a shaping jig (34); b) providing auxiliary male jigs (36) with inner cavities (32) reinforced (33) along their length, coated by membranes (37) suitable for curing; c) providing stiffeners (3); d) arranging the stiffeners (3) in the jig (34) and in their inner openings (6) the auxiliary male jigs (36); e) laminating the outer skin (2); f) curing the stiffened structure (1) with high temperature and pressure; g) removing the auxiliary male jigs (36) after reducing their section (41); h) separating the cured stiffened structure (1) from the jig (34), the design of the inner cavities (32) including their reinforcement (33) and the capacity to maintain or reduce their section by the application of overpressure or underpressure respectively.

## Description

### Field of the Invention

The present invention relates to a process for manufacturing composite material structures for aeronautical fuselages as well as the jig used in such a manufacturing process.

### Background of the Invention

Weight is an essential aspect in the aeronautical industry, therefore optimized structures manufactured with composite materials, mainly carbon fiber composite materials, prevail over metallic structures.

Automatic carbon fiber taping machines represent a great progress with respect to manual operation. These machines have a head pressing against the surface to be taped, therefore this surface must be able to react against said force.

Composite material structures for aeronautical fuselages are formed by panels which in turn comprise a series of stiffeners. The application of the previous aspects to aeronautical fuselages thus leads to integrating the panels forming said fuselages together with their stiffeners in the smallest number of operations, while at the same time said stiffeners are optimized.

The use of stiffeners with a closed section is increasingly more frequent because these stiffeners allow achieving more rigid structures adding a lower weight per stiffener. However, the incorporation of this type of stiffeners complicates the process for manufacturing composite material structures because jigs inside the mentioned stiffeners are necessary, which jigs allow taping the part and the operation for curing the composite material, while at the same time it is necessary to be able to remove these jigs from inside the stiffeners if they are to be hollow.

Processes for manufacturing these structures are known in which a rigid element is introduced inside the section of the stiffener to react to the taping pressure and to the pressure for curing the composite material. However, these processes are expensive, therefore it would be desirable to have more efficient processes, which objective is achieved with the present invention.

### Summary of the Invention

In a first aspect, the present invention proposes a process for manufacturing stiffened structures in composite materials formed by an outer skin and a plurality of stiffeners the cross-section of which has a rough contour with at least one flange joined to the skin, said contour delimiting an inner opening, which process is **characterized in that** it comprises the following steps:
- providing a shaping jig with an outer surface having a shape similar to that of the structure on the side of the stiffeners, including mortises for housing the stiffeners;
- providing auxiliary male jigs consisting of elements made of a material which can maintain its section upon applying an overpressure inside the cylindrical cavities existing therein and which can reduce its section upon applying an underpressure in these cavities; these auxiliary male jig are manufactured with an outer geometry similar to the inner opening of the stiffeners and coated by membranes suitable for curing composite materials;
- providing the stiffeners in a fresh or cured state;
- arranging the stiffeners in the mortises of the jig, coupling them to the geometry of such mortises and arranging in their inner openings the auxiliary male jigs coupled to their geometry; the auxiliary male jigs aiding the curing membrane to be coupled to the inner geometry of each stiffener in this step;
- laminating the outer skin on the surface formed by the jig, the stiffeners and the auxiliary male jigs; the shaping jig and the auxiliary male jigs reacting against the laminating force thanks to the overpressure applied inside the inner cylindrical cavities;
- curing the stiffened structure in high temperature and pressure conditions;
- removing the auxiliary male jigs, since after the curing the section thereof decreases thanks to the underpressure applied inside the inner cylindrical cavities; and
- separating the cured stiffened structure from the jig.

In a second aspect, the present invention provides auxiliary male jigs used in the previous process, made of elastomeric and/or flexible materials. These male jigs have cylindrical cavities with a circular or slightly elliptical or oval section along their length, these cavities in turn being internally reinforced with materials (fiberglass, nylon, etc.) preventing the increase of the perimeter of the section of the cavity upon applying an internal overpressure, while at the same time they are sufficiently flexible so as to allow the collapse of such cavities upon applying an underpressure, thus reducing the section of the male jig, and thus allowing its subsequent removal from inside the stiffeners. If the inner cavities had an elongated section, upon applying an internal overpressure, they would be deformed by attempting to acquire a more circular section, also deforming the outer section of the male jig.

An advantage of the present invention is that it facilitates manufacturing structures in which the section and the area of the stiffeners vary longitudinally, these stiffeners even being able to have, at one or both ends, smaller dimensions than in an intermediate section, because the auxiliary male jigs can be shaped such that they adapt to it.

Another advantage of the present invention is that it facilitates using machines with a pressure taping head because the auxiliary male jigs provide a substrate inside the stiffeners to react against the force of the head.

Other features and advantages of the present invention will be understood from the following detailed description of an illustrative embodiment of its object in relation to the attached drawings.

### Description of the Drawings

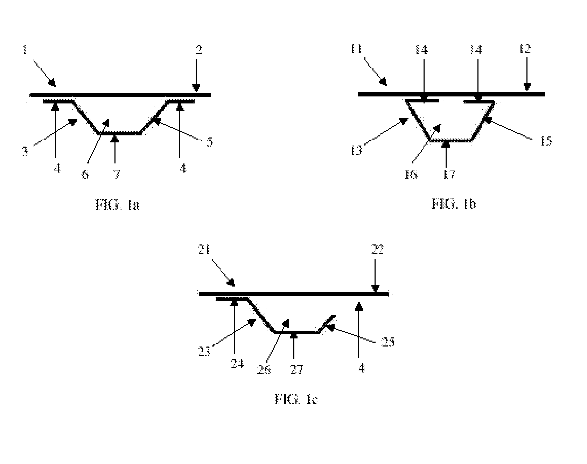

Figures 1a, 1b and 1c show schematic views of composite material structures for aeronautical fuselages formed by a skin and a plurality of omega, trapezium and irregular Z shaped stiffeners, respectively.
Figure 2 schematically shows the steps of the process according to the invention for manufacturing a composite material structure for aeronautical fuselages formed by a skin and a plurality of omega-shaped stiffeners.
Figure 3 schematically shows the step of the process according to the invention for manufacturing a composite material structure for aeronautical fuselages formed by a skin and a plurality of omega-shaped stiffeners whereby the process for taping the skin is carried out.
Figure 4 schematically shows the section of the jig used in the process according to the invention for manufacturing a composite material structure for aeronautical fuselages.
Figure 5 schematically shows the step of the process according to the invention for manufacturing a composite material structure for aeronautical fuselages formed by a skin and a plurality of omega-shaped stiffeners whereby the curing process is carried out.
Figure 6 schematically shows the steps of the process according to the invention for manufacturing a composite material structure for aeronautical fuselages formed by a skin and a plurality of omega-shaped stiffeners whereby the structure is separated from the jig used to manufacture it.

### Detailed Description of the Invention

An embodiment of the process according to the invention for manufacturing stiffened structures 1 in composite materials formed by a skin 2 and a plurality of omega (Ω)-shaped stiffeners 3 with flanges 4 joined to the skin 2, and webs 5 and head 7 separated therefrom is described below.

The process object of the present invention is also applicable for manufacturing a stiffened structure 11 formed by a skin 12 and a plurality of trapezium-shaped stiffeners 13 with flanges 14 joined to the skin 12, and webs 15 and head 17 separated therefrom, as well as a stiffened structure 21 formed by a skin 22 and a plurality of irregular Z-shaped stiffeners 23 with a flange 24 joined to the skin 22, and webs 25 and head 27 separated therefrom.

The stiffeners 3, 13 and 23 have in common the fact that their cross-section has a rough contour with at least one flange 4, 14, 24 joined to the skin 2, 12, 22, said contour delimiting an inner opening 6, 16, 26.

The structures 1, 11, 21 can have an open shape or a revolution part shape as in the case of airplane fuselage parts.

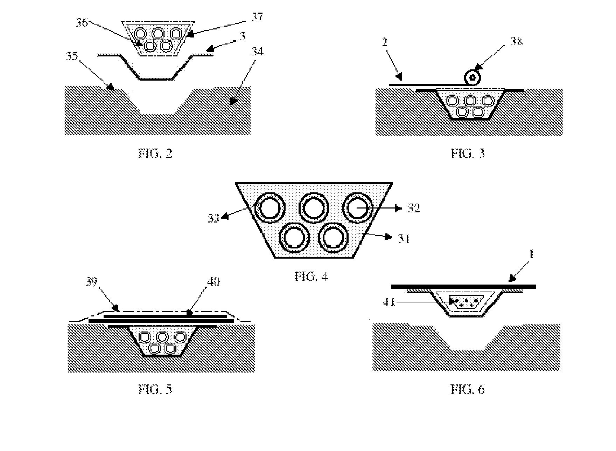

As shown in Figure 2, in the process according to the invention for manufacturing a composite material structure for aeronautical fuselages formed by a skin and a plurality of stiffeners, the omega-shaped stiffeners 3 are placed on the shaping jig 34 having mortises 35, and auxiliary male jigs 36 coated by a membrane 37 suitable for curing composite materials are placed on such stiffeners.

Cured or uncured stiffeners 3 can be used.

The male auxiliary jigs 36 are manufactured in an elastomeric and/or flexible material, for example silicone, rubber etc., with cylindrical cavities with a circular or slightly elliptical or oval section along their length, which cavities are reinforced with a material, fabric or filaments preventing, to a greater or lesser extent, the increase of the perimeter of the cavity upon applying an internal overpressure, but allowing the collapse of these cavities upon applying an underpressure, such that the section of the male jig is reduced, thus allowing its removal from the stiffeners 3. These auxiliary male jigs are carried out with an outer geometry similar to the inner opening 6 of the stiffener using a suitable manufacturing technique.

When each auxiliary male jig 36 is introduced in the opening 6 of the stiffener 3, the curing membrane 37 is aided in being coupled to the inner geometry of each stiffener 3.

The stiffeners 3 and the male jigs 36 can be arranged in the shaping jig 34, having previously coupled them.

Figure 3 shows that in a subsequent step, skin 2 is laminated by means of the head 38 of a taping machine on the surface formed by the shaping jig 34, the stiffeners 3 and the membrane 37 covering the auxiliary male jigs 36. In this step, the shaping jig 34 and the auxiliary male jigs 36 react against the force of the taping head 38.

Figure 4 shows the section of the auxiliary male jigs 36 manufactured with an elastomeric material 31, which jigs react against the force of the taping head 38 thanks to the overpressure applied inside the inner cavities 32 thereof. With the application of pressure in these quasi-inextensible cavities thanks to the reinforcement 33 they contain, an effect is thus obtained which is similar to that which would be obtained by introducing, through said cavities, rigid bars (made of steel, aluminium, etc) with the same section as the cavities.

A variant of the process is taping the skin 2 manually.

Figure 5 shows that in a subsequent step, a curing membrane 39, and optionally a hold-down plate 40, is placed on the assembly of the structure. The structure is then cured in high temperature and pressure conditions in an autoclave. During the curing process, the membrane 37 covering the auxiliary male jigs 36 communicates the inside of the stiffeners 3 with the atmosphere inside the autoclave, thus maintaining the composite material surrounding such membrane, i.e. the composite material of the stiffener 3 and of the laminate 2, pressed, causing the curing.

Once the structure 1 is cured and cooled, the auxiliary male jigs 37 are removed thanks to the reduction of section 41 which occurs upon applying an underpressure in the inner cylindrical cavities, thus facilitating the separation of the structure 1 from the shaping jig 34 and the removal of the auxiliary male jigs 36 from inside the stiffeners 3, as shown in Figure 5 by depicting them with a size smaller than the initial size.

The modifications comprised within the scope defined by the following claims can be introduced in the preferred embodiment which has just been described.

## Claims

1. A process for manufacturing stiffened structures (1) in composite materials, said structures (1) comprising an outer skin (2) and a plurality of stiffeners (3) the cross-section of which has a contour delimited by an inner opening (6), **characterized in that** the mentioned process comprises the following steps:
a) providing a jig (34) with an outer surface having a shape similar to that of the structure (1) on the side of the stiffeners (3), including mortises (35) for housing the stiffeners (3);
b) providing auxiliary male jigs (36) comprising inner cavities (32), these jigs (36) being able to maintain their section during the lamination of the skin (2) upon applying an overpressure inside the cavities (32), while at the same time the structure of inner cavities (32) must allow the collapse of such cavities upon applying an underpressure therein, such that the section (41) of the male jigs (36) is reduced, thus allowing their removal from the stiffeners (3), these male jigs (36) being manufactured with an geometry similar to the inner opening (6) of the stiffeners (3) and being coated by membranes suitable for curing composite materials;
c) providing the stiffeners (3) in a fresh or cured state;
d) arranging the stiffeners (3) in the mortises (35) of the jig (34), coupling them to the geometry of such mortises, and arranging in the inner openings (6) of the stiffeners (3) the auxiliary male jigs (36) coupled to their geometry;
e) laminating the outer skin (2) on the surface formed by the jig (34), the stiffeners (3) and the auxiliary male jigs (36), applying at this time the necessary overpressure for maintaining their section;
f) curing the stiffened structure (1) in high temperature and pressure conditions;
g) removing the auxiliary male jigs (36), previously applying the necessary underpressure for reducing their section (41);
h) separating the cured stiffened structure (1) from the jig (34).

2. A process for manufacturing stiffened structures (1) in composite materials according to claim 1, **characterized in that** auxiliary male jigs (36) comprise elements made of an elastomeric material (31).

3. A process for manufacturing stiffened structures (1) in composite materials according to any of the previous claims, **characterized in that** the cavities (32) of the auxiliary male jigs (36) are reinforced along their length with a material, fabric or filament (33) preventing the increase of the perimeter of the cavities (32) upon applying an internal overpressure, for the purpose of supporting the pressure of the taping head.

4. A process for manufacturing stiffened structures (1) in composite materials according to any of the previous claims, **characterized in that** the cavities (32) of the auxiliary male jigs (36) are cylindrical, with a circular, elliptical or oval section.

5. A process for manufacturing stiffened structures (1) in composite materials according to any of the previous claims,
**characterized in that** the stiffened structure (1) is a revolution part.

6. A process for manufacturing stiffened structures (1) in composite materials according to any of the previous claims, **characterized in that** the stiffeners (3) are omega-shaped.

7. A process for manufacturing stiffened structures (1) in composite materials according to any of the previous claims, **characterized in that** in step d) the stiffeners (3) are arranged in the mortises (35) of the jig (34), having previously coupled in their inner openings (6) the auxiliary male jigs (36).

8. A process for manufacturing stiffened structures (1) in composite materials according to any of the previous claims, **characterized in that** step e) is carried out by means of a head (38) of a taping machine.

9. A process for manufacturing stiffened structures (1) in composite materials according to any of the previous claims,
**characterized in that** before step f) a hold-down plate (40) is placed on the skin (2).

10. An auxiliary male jig (36) used in a process for manufacturing stiffened structures (1) according to any of claims 1-9, **characterized in that** it is made of an elastomeric compound.

11. An auxiliary male jig (36) according to claim 10, **characterized in that** the elastomeric compound is flexible.

12. An auxiliary male jig (36) according to any of claims 10-11, **characterized in that** it is made of a silicone-based compound.

13. An auxiliary male jig (36) according to any of claims 10-12, **characterized in that** it comprises a plurality of cavities (32) along its length.

14. An auxiliary male jig (36) according to any of claims 10-13, **characterized in that** the cavities (32) are cylindrical (32) with a circular, elliptical or oval section.
